# EUROPEAN PATENT SPECIFICATION

(11) **EP 1 205 119 B1**
(45) Date of publication and mention of the grant of the patent: **15.03.2006**
(21) Application number: 01204227.1
(22) Date of filing: 06.11.2001
(51) Int. Cl.: A23L 1/33, A23B 4/20, A23L 3/3472, B65D 81/28

(54) **Packaging for fresh shellfish**
Verpackung für frische Schalentieren
Emballage pour coquillages frais

(30) Priority: 07.11.2000 NL 1016552
(43) Date of publication of application: 15.05.2002
(73) Proprietor: Verwijs, Willem Abraham, 4461 LR Goes (NL); De Kluiver, Edmond Pieter, 8017 HV Zwolle (NL)
(72) Inventor: Verwijs, Willem Abraham, 4461 LR Goes (NL); De Kluiver, Edmond Pieter, 8017 HV Zwolle (NL)
(74) Representative: Jilderda, Anne Ayolt

(56) References cited:
- US-A- 4 550 020
- US-A- 5 451 369
- US-A- 5 645 880
- DATABASE WPI Week 197621 Derwent Publications Ltd., London, GB; AN 1976-38935x XP002171332 & JP 51 041468 A (NIPPI KK), 7 April 1976 (1976-04-07)
- DATABASE WPI Week 200022 Derwent Publications Ltd., London, GB; AN 1997-429129 XP002171333 & JP 09 191822 A (KONDO T), 29 July 1997 (1997-07-29)
- DATABASE WPI Week 200030 Derwent Publications Ltd., London, GB; AN 2000-345331 XP002171334 & JP 2000 110099 A (DAIKO SEISHIKK), 18 April 2000 (2000-04-18)

## Description

The invention relates to a package for fresh shellfish, in particular mussels, comprising an envelope, and to a method for cleaning and/or storing fresh shellfish.

After being caught, mussels or other molluscan and crustacean shellfish are usually washed and stored in storage systems specially intended for this purpose for a period generally of a maximum of 24 hours. They are flushed continuously herein with fresh seawater. After the mussels have been separated mechanically, had the byssus threads removed and been cleaned mechanically, the mussels are cooled and sorted to size. They are then usually packed in jute sacks in quantities of up to 25 kilograms or in plastic bags in quantities of 1-3 kilograms. The mussels are then stored in cooled state and/or transported in cooled state.

Each mussel is naturally contaminated with bacteria from outside (bird and fish excrement etc.) and colonized with bacteria naturally occurring in the body. Under normal conditions the mussels benefit from the bacteria naturally occurring in the body, and their immune system enables them to defend themselves effectively against the pathogenic bacteria from outside.

Mechanical removal of the byssus threads injures the mussel, and the rest of the mainly mechanical treatment process weakens its general condition. The immune system of the mussels hereby becomes locally defective and deteriorates generally, whereby they become susceptible to bacterial infections. These are mainly infections of the pathogenic bacteria from outside, although the bacteria naturally occurring in the body, which are in principle not dangerous, can also cause infections in such conditions.

A packaged or non-packaged mussel confronted with an exceptional bacterial growth will discharge its shell fluid. Owing to the large quantity of bacteria and toxins the fluid has after all become harmful to the mussel. It is therefore important that the mussel has no further contact with this fluid. This is the reason that up until a few years ago only packing materials were used which were able to lose the fluid, such as for instance jute and perforated plastic foil. Packed mussels eventually die as a consequence of an injury infection and will therefore have a shelf-life of only five to six days.

Consumers have long been demanding leakproof packages. Additional measures are required to be able to realize the same shelf-life with leakproof packages as with leaking packages. Without additional measures the shelf-life is limited to only two days.

In order to extend the shelf-life of packed mussels for as long as possible, different measures are known:
a) the initial bacterial mass during packaging is kept as small as possible by filtration and UV treatment of the process water and/or mechanical cleaning of the shells, but these generally applied measures are not sufficient;
b) harmful agents such as bacteria and toxins are removed for instance by
   - discharge reservoirs as for instance disclosed in the Netherlands patent no. 1008035, which describes a plastic tank with a space between two bottoms to remove as much of the mussel fluid as possible. Although this package for mussels provides a leakproof and odourless solution, it has the drawback of being relatively costly and therefore having a strong cost price-increasing effect. This known package moreover represents a relatively great impact on the environment due to the relatively large amount of plastic included therein.
   - absorbents such as the use of an absorbent compound for liquid as described in the European application no. 68530 in which the absorbent compound is able to absorb the leaking liquid and co-packaged liquid. The applied liquid absorber consists either wholly of plastic, which entails the environmental problem already mentioned above, or solely from natural materials which per se form a breeding ground for micro-organisms which may have an adverse effect on the shelf-life of the packed goods.
C) bacterial growth is inhibited by cooling the packed mussels to below 4°C, a measure which is also generally applied; the Netherlands patent no. 1005991 further describes the use in a package for mussels of additional oxygen and carbon dioxide and the applying of a protective gas atmosphere, which measure has the drawback that it is expensive and that the danger of perforation of the package by the sharp shells is great. In that case the package would lose its protective gas, and thereby its shelf-life.

JP 2000 110099 discloses an antibacterial paper for foods, capable of preventing attachment and proliferation of bacteria and suitable for packaging of fresh foods such as shellfish by applying an antibacterial agent containing cetechin or tea extract and quinone of phyllostachys pubesans extract to paper consisting mainly of natural pulp.

The present invention provides an environmentally-friendly, safe, inexpensive and effective package for fresh molluscan or crustacean shellfish, in particular mussels, comprising an envelope which comprises at least one anti-microbially active polypeptide isolated from shellfish such as for instance mussels or oysters. In thus preventing, or at least greatly reducing bacterial growth in released mussel fluid and co-packaged seawater, use is made of compounds naturally occurring in the species which are isolated from shellfish waste. Anti-microbial is understood to mean that at least a part of the contaminating microbes, and preferably all of them, are neutralized or inactivated. In the present application microbes are understood to mean not only bacteria, fungi, yeasts and viruses but also toxic products such as toxins. When such an anti-microbially active polypeptide is applied in a package for shellfish, in particular mussels, the shelf-life thereof then increases by a minimum of three days, which amounts to a minimum of 50% of the average storage life.

The American patent US 4,550,020 describes how the anti-microbially active polypeptide fractions can be isolated from shellfish such as mussels. Preferably used for this purpose are mussels of the Mytilus species such as the Mytilus edulis (blue mussel), the Mytilus perna, the Mytilus californeanus, the Mytilus smaragdinus, the Mytilus galloprovincialis or of the species Perna, Chlamys islandica or Cyprina islandica. The polypeptide fractions can for instance be isolated from mussels and/or their waste water containing body fluids of these animals. All systems of these rudimentary animals are hereby understood which correspond with those in higher animals, such as the blood and lymphatic systems and further tissues such as the skin. It is for instance possible to form an extract of these body fluids and to isolate the desired polypeptide fraction using affinity chromatography. If desired, the anti-microbially active fraction can then be obtained in powder form by for instance freeze drying. Measured with the SDS-PAGE technique, the anti-microbially active polypeptide has a molecular weight of between 10,000 and 200,000, in particular between 12,000 and 40,000, and more particularly between 14,000 and 30,000.

Optionally bonded to the anti-microbially active polypeptide, one or more of the compounds glycogen and mucopolysaccharides such as heparan sulphate and chondroitin sulphate, preferably co-isolated from the same shellfish species, can also be present in the anti-microbially active polypeptide fraction isolated from the mussels. However, addition to the envelope containing shellfish, and particularly mussels, separately of the anti-microbially active polypeptide, of for instance glycogen and/or one or more mucopolysaccharides isolated from other species such as for instance waste from mammals also forms an aspect of the present invention. The recent non-prepublished research by Zwaan et al. in Marine Ecology Progress Series 222, 169-179 (2001) confirms that mussels treated with antibiotics survive significantly longer than untreated mussels.

The anti-microbially active polypeptide fraction isolated as for instance described above can be added, dissolved in for instance water, to the mussels during packing, so that the anti-microbial compound is present in the package in solution or suspension. The anti-microbially active polypeptide fraction can of course also be added as powder to the envelope comprising mussels, wherein this powder is dissolved or suspended not only in co-packaged adhering liquid but also in the liquid of exiting mussel fluid. It is also possible to apply the anti-microbially active polypeptide bonded to an inert carrier in the mussel package, wherein the carrier preferably comprises a natural material such as starch, cotton, linen, jute or active carbon or synthetic material such as rayon or polyamide, or a plastic polymer structure such as styrene or latex. When a carrier is used which also absorbs liquid as described in the patent NL 1001054 of applicant, the synergistic effect of both measures will then further increase the shelf-life of the packed shellfish. The above described methods of adding the anti-microbially active polypeptide fraction are of course only examples thereof, and other methods must also be deemed to form part of the present invention.

It will further be apparent that combining the application of the present invention with other known techniques which increase the shelf-life of packed molluscan and crustacean shellfish, and which are specified above, also falls within the scope of the present invention.

Finally, the anti-microbial polypeptide fraction from shellfish such as mussels and oysters as described above can not only be used advantageously in the storage of mussels, but also in the anti-microbial cleaning of shellfish, in particular mussels, prior to packing.

## Claims

1. Package for fresh molluscan or crustacean shellfish, in particular mussels, comprising an envelope, **characterized in that** the envelope comprises at least one anti-microbially active polypeptide isolated from shellfish.

2. Package as claimed in claim 1, **characterized in that** the anti-microbially active polypeptide has a molecular weight of between 10,000 and 200,000, in particular between 12,000 and 40,000, and more particularly between 14,000 and 30,000.

3. Package as claimed in claim 1 or 2, **characterized in that** the anti-microbially active polypeptide is isolated from mussels.

4. Package as claimed in claim 3, **characterized in that** the anti-microbially active polypeptide is isolated from one or more of the following species of mussel: Mytilus, Perna, Chlamys islandica and Cyprina islandica.

5. Package as claimed in any of the foregoing claims, **characterized in that** the envelope contains one or more of the compounds glycogen, mucopolysaccharides and proteoglycans.

6. Package as claimed in any of the foregoing claims, **characterized in that** the anti-microbially active polypeptide is present in solution or in suspension or aerosol.

7. Package as claimed in any of the claims 1-5, **characterized in that** the anti-microbially active polypeptide is present bonded to a carrier.

8. Application of an anti-microbial agent containing at least one anti-microbially active polypeptide isolated from shellfish, in particular mussels, in the cleaning of fresh molluscan or crustacean shellfish, in particular mussels.

9. Method for storing molluscan or crustacean shellfish, in particular mussels, **characterized in that** at least one anti-microbially active polypeptide isolated from shellfish, in particular mussels, is applied.

## Patentansprüche

1. Verpackung für frische Weichtier- oder Krebstier-Schalentiere, welche Verpackung eine Umhüllung aufweist, **dadurch gekennzeichnet, dass** die Umhüllung mindestens ein antimikrobiell aktives Polypeptid aufweist, welches aus Schalentieren isoliert wurde.

2. Verpackung nach Anspruch 1, **dadurch gekennzeichnet, dass** das antimikrobiell aktive Polypeptid ein Molekulargewicht von zwischen 10.000 und 200.000, insbesondere zwischen 12.000 und 40.000 und noch bevorzugter zwischen 14.000 und 30.000 aufweist.

3. Verpackung nach Anspruch 1 oder 2, **dadurch gekennzeichnet, dass** das antimikrobiell aktive Polypeptid aus Muscheln isoliert ist.

4. Verpackung nach Anspruch 3, **dadurch gekennzeichnet, dass** das antimikrobiell aktive Polypeptid aus einem oder mehreren der folgenden Muschel-Spezies isoliert ist: Mytilus, Perna, Chlamys islandica und Cyprina islandica.

5. Verpackung nach einem der vorstehenden Ansprüche, **dadurch gekennzeichnet, dass** die Umhüllung eine oder mehrere der Verbindungen Glycogen, Mucopolysaccharide und Proteoglycane enthält.

6. Verpackung nach einem der vorstehenden Ansprüche, **dadurch gekennzeichnet, dass** das antimikrobiell aktive Polypeptid in Lösung oder in einer Suspension oder einem Aerosol vorliegt.

7. Verpackung nach einem der Ansprüche 1 bis 5, **dadurch gekennzeichnet, dass** das antimikrobiell aktive Polypeptid an einen Träger gebunden vorliegt.

8. Verwendung eines antimikrobiellen Agens, welches mindestens ein aus Schalentieren, insbesondere aus Muscheln, isoliertes antimikrobiell aktives Polypeptid aufweist zur Reinigung von frischen Weichtier- oder Krebstier-Schalentieren, insbesondere von Muscheln.

9. Verfahren zur Lagerung von Weichtier- oder Krebstier-Schalentieren, insbesondere von Muscheln, **dadurch gekennzeichnet, dass** mindestens ein antimikrobiell aktives Polypeptid verwendet wird, welches aus Schalentieren, insbesondere Muscheln, isoliert ist.

## Revendications

1. Emballage pour fruits de mer frais de type mollusques ou crustacés, en particulier des moules, comprenant une enveloppe, **caractérisé en ce que** l'enveloppe comprend au moins un polypeptide actif à l'encontre des microbes, isolé depuis des fruits de mer.

2. Emballage selon la revendication 1, **caractérisé en ce que** le polypeptide actif à l'encontre des microbes a un poids moléculaire entre 10.000 et 200.000, en particulier entre 12.000 et 40.000, et plus particulièrement entre 14.000 et 30.000.

3. Emballage selon la revendication 1 ou 2, **caractérisé en ce que** le polypeptide actif à l'encontre des microbes est isolé à partir de moules.

4. Emballage selon la revendication 3, **caractérisé en ce que** le polypeptide actif à l'encontre des microbes est isolé depuis une ou plusieurs des espèces de moules qui suivent : Mytilus, Perna, Chlamys islandica et Cyprina islandica.

5. Emballage selon l'une quelconque des revendications précédentes, **caractérisé en ce que** l'enveloppe contient un ou plusieurs des composés que sont le glycogène, les mucopolysaccharides et les protéoglycérines.

6. Emballage selon l'une quelconque des revendications précédentes, **caractérisé en ce que** le polypeptide actif à l'encontre des microbes est présent en solution ou en suspension ou comme aérosol.

7. Emballage selon l'une quelconque des revendications 1 à 5, **caractérisé en ce que** le polypeptide actif à l'encontre des microbes est présent sous forme liée à un support.

8. Application d'un agent anti-microbien contenant au moins un polypeptide actif à l'encontre des microbes, isolé depuis des fruits de mer, en particulier des moules, pour le nettoyage de fruits de mer frais de type mollusques ou crustacés, en particulier des moules.

9. Procédé pour stocker des fruits de mer de type mollusques ou crustacés, en particulier des moules, **caractérisé en ce que** l'on applique au moins un polypeptide actif à l'encontre des microbes, isolé depuis des fruits de mer, en particulier des moules.
